# EUROPEAN PATENT APPLICATION

(11) **EP 2 251 801 A2**
(43) Date of publication of application: **17.11.2010**
(21) Application number: 10160683.8
(22) Date of filing: 22.04.2010
(51) Int. Cl.: G06F 17/30

(54) **Method, terminal and server for transcoding data**

(30) Priority: 13.05.2009 CN 200910107409; 05.01.2010 WO PCT/CN2010/070016
(71) Applicant: Huawei Technologies Co., Ltd., Shenzhen, Guangdong 518129 (CN)
(72) Inventor: Li, Peng, Shenzhen Guangdong 518129 (CN); Fu, Haifang, Shenzhen Guangdong 518129 (CN)
(74) Representative: Barth, Stephan Manuel

(57) **Abstract**

A method for synchronizing data is disclosed. The method includes: receiving a data synchronization request; determining data that needs to be transcoded and a transcoding rule for such data according to the data synchronization request and features of a widget terminal that requests data synchronization; and sending the data that is transcoded according to the transcoding rule to the widget terminal that requests data synchronization. A widget terminal and server are also provided. The present invention can extend the use scope of widget terminals.

## Description

### Field of the Invention

The present invention relates to the computer field, and in particular, to a method, widget terminal and server for synchronizing data.

### Background of the Invention

With the fast development of the mobile Internet, the widget emerges, which further boosts the development of the Internet. The widget is a JavaScript-based application platform, which may be a network-based utility that can operate on the desktop independently or a small application. A user may enjoy services such as news reading, weather information and image browsing through the widget. Certainly, the user must have a widget terminal to support these services. The widget terminal is a terminal equipped with widget applications, such as a mobile widget terminal and a TV widget terminal. When the user enjoys such services, the widget terminal obtains data corresponding to the services from a network server. The obtained data is uploaded by widget terminals that are of the same type as the widget terminal. That is, only the same type of widget terminals can obtain the data, or the data in the same type of widget terminals may be synchronized through the network server.

During the implementation of the present invention, the inventor finds at least following weaknesses: Because only the same type of widget terminals can synchronize the data through the network server, the use scope of the widget terminals is limited, which reduces the service capabilities of the widget terminals.

### Summary of the Invention

Embodiments of the present invention provide a method, a widget terminal and a server for synchronizing data to extend the use scope of widget terminals.

A method for synchronizing data between different types of widget terminals is provided in an embodiment of the present invention. The method includes:
receiving a message that includes a data synchronization request;
determining data that needs to be transcoded and a transcoding rule for such data according to the data synchronization request and features of a widget terminal that requests data synchronization; and
sending the data that is transcoded according to the transcoding rule to the widget terminal that requests data synchronization.

A widget server for synchronizing data is provided in an embodiment. The widget server communicates with different types of widget terminals and multiple storage servers and includes:
a synchronization controlling module, adapted to: receive a message that includes a data synchronization request from a widget terminal, obtain data information that can be synchronized in the request, and obtain features of the widget terminal; and
a data controlling module, adapted to determine data that needs to be transcoded in the synchronized data and a transcoding rule for such data according to the data information that can be synchronized and features of the widget terminal.

The synchronization controlling module is further adapted to send the transcoding rule to a storage server so that the storage server transcodes the data that needs to be transcoded according to the transcoding rule and sends the transcoded data to the widget terminal.

A storage server for synchronizing data is provided in an embodiment of the present invention. The storage server communicates with a widget terminal and a widget server, and includes a session controlling module, a data processing module and a storing module, where:
the session controlling module is adapted to receive a transcoding rule and a content index for the synchronized data from the widget server; and
the data processing module is adapted to: obtain the synchronized data from the storing module according to the content index for the synchronized data, transcode the synchronized data according to the transcoding rule, and send the transcoded data to the widget terminal.

A server for synchronizing data is provided in an embodiment of the present invention. The server communicates with different types of widget terminals, and includes a widget server and multiple storage servers, where:
the widget server is adapted to: receive a message that includes a data synchronization request from a widget terminal, and determine data that needs to be transcoded and a transcoding rule according to the data synchronization request and the features of the widget terminal that requests data synchronization; and
the storage servers are adapted to: transcode the data that needs to be transcoded according to the transcoding rule, and send the transcoded data to the widget terminal that requests data synchronization.

A method for synchronizing data between different types of widget terminals is provided in an embodiment of the present invention. The method includes:
by a widget terminal, sending a message that includes a data synchronization request to a widget server, where the data synchronization request is used by the widget server to obtain data information that can be synchronized and features of the widget terminal, and the data information that can be synchronized and the features of the widget terminal are provided for the widget server to determine data that needs to be transcoded in the synchronized data and a transcoding rule for such data;
receiving a download response from the widget server; and
sending a data download request to a storage server according to the download response, and receiving data that is transcoded by the storage server according to the transcoding rule of the widget server.

A widget terminal for synchronizing data is provided in an embodiment of the present invention. The widget terminal communicates with a widget server and multiple storage servers and includes:
a synchronization requesting module, adapted to: send a message that includes a data synchronization request to the widget server, where the data synchronization request is used by the widget server to obtain data information that can be synchronized and features of the widget terminal, and the data information that can be synchronized and the features of the widget terminal are provided for the widget server to determine data that needs to be transcoded in the synchronized data and a transcoding rule for such data, and receive a download response from the widget server; and
a content transmitting module, adapted to: send a data download request according to the download response, and receive data that is transcoded by the storage server according to the transcoding rule of the widget server.

With the preceding method, widget terminal and server for synchronizing data, the data that needs to be transcoded and transcoding rule for such data are determined according to the data synchronization request and the features of the widget terminal that requests data synchronization; the transcoded data is sent to the widget terminal that requests data synchronization. Thus, different types of widget terminals may download data from other widget terminals through the server, which extends the use scope of the widget terminals.

### Brief Description of the Drawings

To make the technical solution under the present invention or in the prior art clearer, the accompanying drawings for illustrating the embodiments of the present invention or illustrating the prior art are outlined below. Evidently, the accompanying drawings are exemplary only, and those skilled in the art can derive other drawings from such accompanying drawings without creative work.
FIG. 1 is an overall flowchart of a method for synchronizing data in an embodiment of the present invention;
FIG. 2 shows a data upload process of a method for synchronizing data in an embodiment of the present invention;
FIG. 3 shows a data download process of a method for synchronizing data in an embodiment of the present invention;
FIG. 4 is a schematic diagram illustrating an application environment of a widget system in an embodiment of the present invention;
FIG. 5 shows a structure of a widget terminal in an embodiment of the present invention;
FIG. 6 shows a first structure of a server in an embodiment of the present invention; and
FIG. 7 shows a second structure of a server in an embodiment of the present invention.

### Detailed Description of the Invention

The technical solution of the present invention is hereinafter described in detail with reference to the accompanying drawings. It is evident that the embodiments are exemplary only and the present invention is not limited to such embodiments. Other embodiments that those skilled in the art derive from the embodiments of the present invention without creative work also fall in the scope of protection of the present invention.

In an embodiment of the present invention, different types of widget terminals communicate with a server, and the server includes a widget server and multiple storage servers. In this embodiment, the user may view a data content through different widget terminals provided that the data format is supported by the widget terminals. Assume there are a widget terminal A, a widget terminal B and a widget terminal C, where the widget terminal A may be a mobile widget terminal, the widget terminal B is a TV widget terminal and the widget terminal C is a vehicle widget terminal, the user may download data from the storage server through the widget terminal A, widget terminal B or widget terminal C. Certainly, the widget terminal A, the widget terminal B or the widget terminal C may automatically download data from the storage server on a timed basis and provide the user with the data for viewing. The data stored in the storage server is uploaded by the widget terminal A, the widget terminal B or the widget terminal C. The widget terminal A may view data uploaded by the widget terminal B or the widget terminal C. It is understandable that the uploaded data may be viewed in different widget terminals or that data may be synchronized between different types of widget terminals through the server. Certainly, the user needs to send a request to the widget server to view or upload data through the widget terminal A, the widget terminal B or the widget terminal C. For example, if the mobile widget terminal supports image and video data, the mobile widget terminal may download image or video data uploaded by the TV widget terminal or the vehicle widget terminal from the storage server.

Certainly, the storage server may be set in the widget server; that is, the storage server is a component of the widget server.

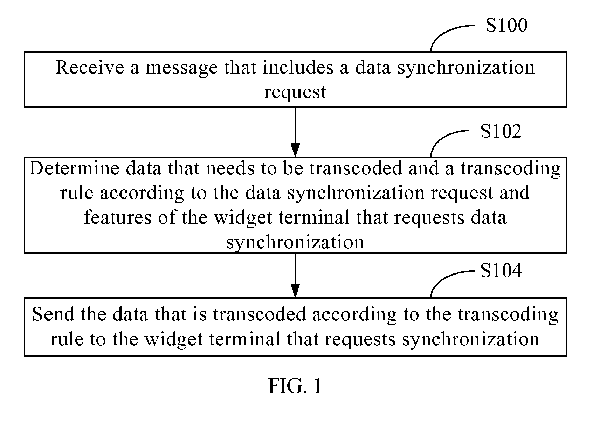

FIG. 1 is an overall flowchart of a method for synchronizing data in an embodiment of the present invention. The method includes the following steps:
S100. Receive a message that includes a data synchronization request.
S102. Determine data that needs to be transcoded and a transcoding rule according to the data synchronization request and features of the widget terminal that requests data synchronization.

This step includes:
determining data information that can be synchronized in the data synchronization request;
determining data that needs to be transcoded in the synchronized data according to the features of the widget terminal that requests data synchronization and the data information that can be synchronized; and
determining a transcoding rule for the data that needs to be transcoded according to the features of the widget terminal that requests data synchronization and the data information that can be synchronized.

S104. Send the data that is transcoded according to the transcoding rule to the widget terminal that requests data synchronization.

Specifically, before being transcoded, the data in the server is uploaded by other different types of widget terminals. When a widget terminal uploads data, the server may receive a data upload request from the widget terminal, store the basic information and control information of the data according to the request, and return an upload response to the widget terminal. Then, the server receives the data uploaded by the widget terminal. The basic information of the data includes ContentName indicating the name of the data, ContentSize indicating the size of the data, ContentType indicating the type of the data and ContentFormat indicating the format of the data; the control information includes synchronization information (Syncable), priority information (Priority) and open information (Open).

Specifically, before the widget terminal uploads or downloads data, it must be guaranteed that the widget terminal has been registered in the server. Thus, the server receives a feature registration message from the widget terminal, obtains static features in the feature registration message and stores the features. The static features include the resolution of the widget terminal, and image formats and video formats supported by the widget terminal. In addition, the server receives a feature report request from the widget terminal, and obtains dynamic features of the widget terminal, where the dynamic features include the network access mode and remaining storage space of the widget terminal.

For better description of the present invention, the following describes the data upload and data download processes in detail.

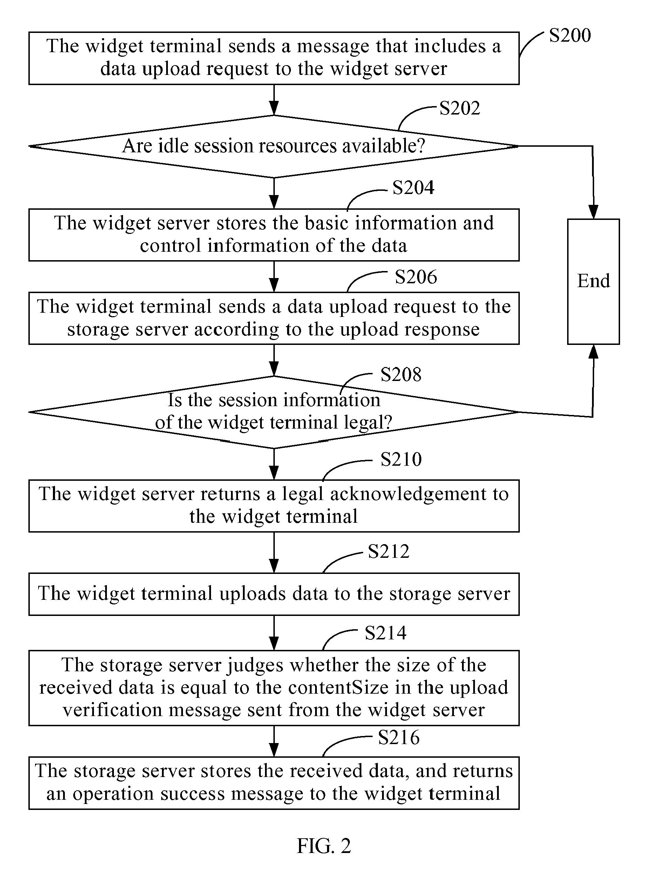

FIG. 2 shows a data upload process of a method for synchronizing data in an embodiment of the present invention.

In this embodiment, to view data each other, different types of widget terminals need to upload their data to the storage server for storing so as to synchronize the data between the storage server and the widget terminals. When multiple widget terminals need to upload their data to the storage server, they need to send an upward synchronization request to the widget server. Before the upward synchronization request is sent to the widget server, if a widget terminal is used for the first time, the widget terminal needs to be registered in the widget server; that is, the widget terminal needs to register its static features in the widget server. In addition, the widget terminal needs to upload its dynamic features to the widget server on a real-time basis. In this embodiment, the static features of a widget terminal may include the image processing performance, video processing performance, and screen resolution of the widget terminal; the dynamic features of a widget terminal may include the network access mode and remaining storage space of the widget terminal, where the network access mode may include WIFI, GPRS, 3G and Bluetooth.

In this embodiment, the process of registering the static features in the widget server by the widget terminal may include:
Step A: The widget terminal sends a feature registration message that carries the terminal ID and list of static features to the widget server. The following table shows the format of the feature registration message.

| Parameter | Mandatory/Optional | Type | Meaning |
|---|---|---|---|
| User_id | Mandatory | String | User ID. |
| DeviceId | Mandatory | String | Terminal model. |
| requestType | Mandatory | String | devREG, indicating the device capability registration request. |
| body | Mandatory | JSONObject | Message body, indicating static features of the widget terminal to be registered. |

The following table shows the format of the message body.

| Parameter | Mandatory/Optional | Type | Meaning |
|---|---|---|---|
| screen | Mandatory | String | Resolution of the widget terminal. |
| image | Optional | JSONArray | Image format supported by the widget terminal. The image format is not supported by default. |
| video | Optional | JSONObject | Video format supported by the widget terminal. The video format is not supported by default. |

Step B: The widget server receives the feature registration message, obtains and stores the static features in the feature registration message, and returns an operation success response to the widget terminal.
Step C: The widget server returns an operation failure response indicating re-registration to the widget terminal if failing to extract the features.

For better understanding, the following provides an example:
The widget terminal may send a registration message as follows: {"User_id" : ""13421802457", "DeviceId" : "Nokia N95", "requestType": "devREG", "body" : { screen-resolution": "320*240", "image": ["jpeg", "gif", "png"], "video":["3GP", "mpeg4", "flash"]}};
When the operation of the widget server succeeds, the widget server returns a message similar to the following:
   {"type": "success", "body" : {}}
When the operation of the widget server fails, the widget server returns a message similar to the following:
   {"type" : "error", "body" : {"errorCode" : "NE"}}.

In this embodiment, if an event is triggered in the widget terminal, for example, if the remaining storage space is changed due to data downloaded to or deleted from the widget terminal, or if the access mode of the widget terminal is changed, the widget terminal needs to report its dynamic features on a real-time basis. In this embodiment, the process of reporting the dynamic features by the widget terminal may include:
Step D: The widget terminal sends a feature report request to the widget server. The feature report request carries the network access mode and remaining storage space (that is, the dynamic features) of the widget terminal.

The following table shows the format of the feature report request.

| Parameter | Mandatory/Optional | Type | Meaning |
|---|---|---|---|
| User_id | Mandatory | String | User ID. |
| DeviceId | Mandatory | String | Terminal model. |
| requestType | Mandatory | String | devREG, indicating the device capability report request. |
| body | Mandatory | JSONObject | Message body, indicating dynamic features of the widget terminal to be registered. |

The following table shows the format of the message body.

| Parameter | Mandatory/Optional | Type | Meaning |
|---|---|---|---|
| storage | Mandatory | Number | Remaining storage space of the widget terminal. |
| Access | Mandatory | String | Network access mode, including WIFI, GPRS, 3G and ADSL. |

Step E: The widget server receives the feature report request, obtains and stores the dynamic features, and returns an operation success response to the widget terminal.
Step F: The widget server returns an operation failure response indicating re-registration to the widget terminal if failing to extract the dynamic features.

For better understanding of this embodiment of the present invention, the following provides an example:
The widget terminal may send a feature report request as follows:
   {"User_id": "13421802457", "DeviceId":"Nokia N95","requestType":"devREP", "body": {"stowage" :10M, "Access": "GPRS" }

When the operation of the widget server succeeds, the widget server returns a message similar to the following:
{"type":"success","body": { }}

When the operation of the widget server fails, the widget server returns a message similar to the following:
{"type": :"error","body" : {"errorCode":"NE"}}.

After the widget terminal is registered, to upload data to the storage server, the widget terminal sends a data upload request to the widget server.

S200. The widget terminal sends a message that includes a data upload request to the widget server. In this embodiment, the widget terminal may send the data upload request to the widget server on a timed basis or when receiving an operation command from the user. Certainly, other terminals may act as the agent of the widget terminal in step S200 to forward the data upload request of the widget terminal. The message may also be extended to include other information. The following table shows the format of the data upload request.

| Parameter | Mandatory/Optional | Type | Meaning |
|---|---|---|---|
| User_id | Mandatory | String | User ID. |
| Widgetid | Optional | String | ID of the widget terminal for synchronizing data, which records actions of the widget terminal. |
| DeviceId | Mandatory | String | Terminal model. |
| requestType | Mandatory | String | devREG, indicating data upload. |
| body | Mandatory | JSONObject | Message body, reporting the content index. |

The following table shows the format of the message body.

| Parameter | Mandatory/Optional | Type | Meaning |
|---|---|---|---|
| ContentName | Mandatory | String | Name of the uploaded data. |
| ContentSize | Mandatory | Number | Size of the uploaded data. |
| ContentType | Mandatory | String | Type of the uploaded data, including PIM, image and video (for selecting the data to be synchronized). |
| ContentFormat | Optional | String | Format of the uploaded data (for transcoding the content). |
| Syncable | Optional | Boolean | 0: The uploaded data is synchronized; 1: The uploaded data is not synchronized. The default value is 0. |
| Priority | Optional | Number | The default value is the lowest priority (automatic filtering of the synchronized data). |
| Open | Optional | Boolean | 0: Not open; 1: Open. The default value is 0. |

In this embodiment, for the Syncable parameter, 1 may indicate that the uploaded data is synchronized, and 0 is used to indicate that the uploaded data is not synchronized. Certainly, other letters, numbers or symbols may be used to indicate whether the uploaded data is synchronized or not. Similarly, for the Open parameter, 1 may indicate that the uploaded data is not open, and 0 indicates that the uploaded data is open. Certainly, other letters, numbers or symbols may be used to indicate whether the uploaded data is open or not.

The following provides an example of the data upload request:

```
     {"User_id": "13421802457", "DeviceId": "Nokia N95", "requestType": "upload",
         "body":{
         "content": [
             { "ContentName
 ":"calendar" ,"ContentSize": :1024,"ContentType": "PIM","priority" 0, "expire": 3600},
 {"ContentName ": "SMS", "ContentSize":1024, "ContentType":"PIM",
 "priority" 1, "expire": 3600}
            ]
         }
     }
```

S202. The widget server judges whether there are idle session resources. If there are idle session resources, the process proceeds to step S204. If there are not idle session resources, the widget server returns an error code. Then, the process ends. In this embodiment, the step of judging whether there are idle session resources is to judge whether the current state of the storage server is busy, whether the storage space of the storage server is fully occupied, whether the size of the data uploaded by the widget terminal already exceeds the remaining capacity of the storage server, or whether the number of sessions between the storage server and the widget terminal reaches the maximum value. When any of these conditions is not met, it indicates that there are no idle session resources. In this embodiment, this step is not limited to the prior art.

S204. The widget server stores the basic information and control information of the data. In this embodiment, it is necessary to set a content index for the data (ContentIndex). In this embodiment, the basic information of the data includes ContentName, ContentSize, ContentType and ContentFormat. The control information includes Syncable information, Priority information and Open information. Each data has a content index.

After step S204 is executed, the process proceeds to step S206. The widget server sends an upload response to the widget terminal and an upload verification message and a content index to the storage server. The upload verification message carries a session key (SessionKey) and ContentSize, and the upload response carries a session key (SessionKey) and a data upload address, where the data upload address is the address of the storage server. The following table shows the format of the upload response.

| Parameter | Mandatory/Optional | Type | Meaning |
|---|---|---|---|
| Type | Mandatory | String | Type of the upload response: uploadResp. |
| body | Mandatory | JSONObject | Message body, uploading a session allocation list. |

The following table shows the format of the message body.

| Parameter | Mandatory/Optional | Type | Meaning |
|---|---|---|---|
| ContentName | Mandatory | String | Name of the uploaded data. |
| SessionKey | Mandatory | String | Session control information. |
| url | Mandatory | String | Data upload address. |

The following provides an example of the upload response:

```
     Response:
     {"type" : "uploadResp",
     "body":{
         "session" :
              [
             {"ContentName ": "calendar", "SessionKey":"abcve123456","url":
 "http://cloud/upload1.servlet"},
     {"ContentName ": " S M S " , "SessionKey":
 "abcve123457","url":"http://cloud/upload2.servlet"}
            ]
         }
     }
```

S206. The widget terminal sends a data upload request to the storage server according to the upload response. In this embodiment, the data upload request carries a session key. In this embodiment, the widget terminal sends a data upload request according to the data upload address carried in the upload response.

S208. The storage server judges whether the data upload request is legal. In this embodiment, the storage server compares the session key in the data upload request with the session key in the upload verification message sent from the widget server. If both are the same, the data upload request is legal. Then, the process proceeds to step S210. If both are different, the process ends.

S210. The widget server returns a legal acknowledgement to the widget terminal.

S212. The widget terminal uploads data to the storage server.

S214. The storage server judges whether the size of the received data is equal to the ContentSize in the upload verification message sent from the widget server. If both are the same, the process proceeds to step S216. If both are different, the storage server cancels the storage operation.

S216. The storage server stores the received data, and returns an operation success response to the widget terminal. In this embodiment, the storage server associates the content index of the data with the received data before storing the data, so that the data may be easily read according to the content index.

According to the synchronization method provided in this embodiment of the present invention, different types of widget terminals may upload their data to the storage server for storing on a timed basis to synchronize the data between the widget terminals and the storage server. That is, it is guaranteed that the data in the widget terminals can be found in the storage server, or that the data is synchronized between the server and the widget terminals.

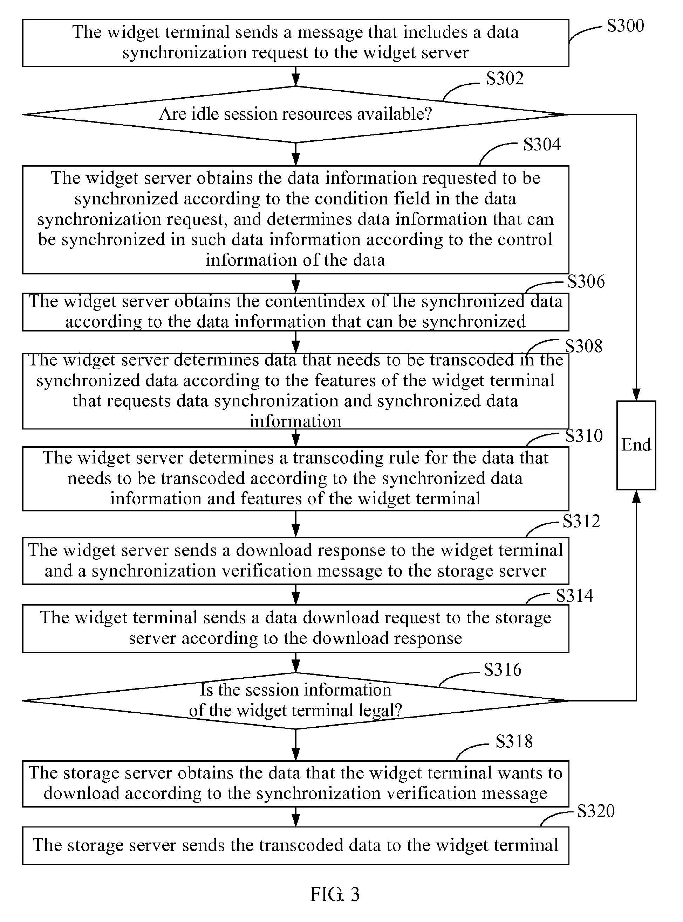

FIG. 3 shows a data download process of a method for synchronizing data in an embodiment of the present invention.

In this embodiment, when the user wants to view the data in the storage server through a widget terminal, or when the widget terminal automatically downloads data from the storage server on a timed basis and provides the user with the data for viewing, the widget terminal needs to send a message that includes a data synchronization request to the widget server before downloading desired data from the storage server. Thus, the data is synchronized between the widget terminal and the storage server, and the data viewed in one widget terminal is synchronized with data in any other widget terminal. Certainly, the user selects and views data of which the format is supported by the widget terminal, but dose not select and view data of which the format is not supported by the widget terminal. The message may also include information other than the data synchronization request.

Certainly, the widget terminal may forward the data synchronization request to the widget server through other agents of the widget terminal so long as the agents add the information of the widget terminal that requests data synchronization to the request; that is, the agents notify the widget server of the widget terminal that requests data synchronization.

S300. The widget terminal sends a message that includes a data synchronization request to the widget server. In this embodiment, the widget terminal may send the message that includes the data synchronization request to the widget server on a timed basis or when receiving an operation command from the user. The following table shows the format of the data synchronization request.

| Parameter | Mandatory/Optional | Type | Meaning |
|---|---|---|---|
| User_id | Mandatory | String | User ID. |
| Widgetid | Optional | String | ID of the widget terminal for synchronizing data, which records actions of the widget terminal. |
| DeviceId | Mandatory | String | Terminal model. |
| requestType | Mandatory | String | Sync, indicating the content that is synchronized between the widget terminal and the server. |
| body | Mandatory | JSONObject | Message body, reporting the content index. |

The format of the message body includes a condition field. The following table shows the format of the condition field.

| Parameter | Mandatory/Optional | Type | Meaning |
|---|---|---|---|
| ContentTypeList | Optional | JSONArray | Type of synchronized contents: PIM, image, and video. |

The following provides an example of the data synchronization request:

```
 {"User_id": "13421802457", "DeviceId": "NokiaN95", "requestType": "Sync",
         "body":{
         "condition":{
            "ContentTypeList": ["PIM", "Image" ]
            }
         }
     }
```

S302. The widget server judges whether there are idle session resources. If there are idle session resources, the process proceeds to step S304. Otherwise, the widget server returns an error code. Then, the process ends.

S304. The widget server obtains data information requested to be synchronized according to the condition field in the message that includes the data synchronization request, and determines data information that can be synchronized in such data information according to the control information of the data stored in the widget server. In this embodiment, the widget server obtains the data information requested to be synchronized according to the content of the ContentTypeList (list of content types) in the condition field, and determines whether the data can be synchronized according to the syncable information in the control information of the data stored in the widget server. In this embodiment, the step of obtaining the data information requested to be synchronized is to know which data needs to be synchronized in the data synchronization request, where the data may include images and videos. The step of determining the data information that can be synchronized is to determine which data in the obtained data can be synchronized.

S306. The widget server obtains a ContentIndex of the synchronized data according to the data information that can be synchronized.

S308. The widget server determines data that needs to be transcoded in the synchronized data according to the features of the widget terminal that requests data synchronization and the synchronized data information. In this embodiment, different widget terminals may have different performances and features. For example, different widget terminals may have different image processing features, video processing features or screen displaying features. Thus, a matching process is required; that is, a downloading widget terminal may view the downloaded data according to the features of the widget terminal. In this embodiment, the widget server may match the stored basic information of the synchronized data with the features (may be considered to be static features) of the widget terminal. If the matching fails, the widget server determines that the data needs to be transcoded.

For example, if the synchronized data is an image and a video, the ContentType and ContentFormat of the synchronized data need to be obtained. To display the image and video, the resolution is required. The widget server obtains the resolution information of the widget terminal and processes image format information and video format information. If the synchronized data is different from the features of the widget terminal in the image format, video format or resolution, the widget server needs to transcode or convert the synchronized data.

S310. The widget server determines a transcoding rule for the data that needs to be transcoded according to the synchronized data information and features of the widget terminal. In this embodiment, the transcoding rule is a rule for converting the format of the current synchronized data into a format that can be supported by the widget terminal that obtains the synchronized data, and may include a rule for increasing or decreasing the resolution, a rule for converting the image format or a rule for converting the video format. For example, if the data information of the data to be synchronized includes the jpg image format and image resolution 1024*768, the features of the widget terminal should be as follows: the image format is png; the screen resolution is 240*320. Then, the transcoding rule is as follows: tans:["jpg","png"]; zoom: ["1024*768", "240*320"].

S312. The widget server sends a download response to the widget terminal and a synchronization verification message to the storage server. In this embodiment, the synchronization verification message carries SessionKey, ContentSize, ContentIndex, and a data transcoding rule, for example,
{"SessionKey":"asdff1236","ContentSize":10240,"ContentIndex":"abc123","trans": ["jpg", "png"]}.

The following table shows the format of the download response.

| Parameter | Mandatory/Optional | Type | Meaning |
|---|---|---|---|
| Type | Mandatory | String | Type of the synchronization response: yncContent. |
| body | Mandatory | JSONObject | Message body, list of synchronized data. |

The following table shows the format of the message body.

| Parameter | Mandatory/Optional | Type | Meaning |
|---|---|---|---|
| ContentIndex | Mandatory | String | Content index, identifying the data that needs to be synchronized. |
| SessionKey | Mandatory | String | Session control information. |
| url | Mandatory | String | Data download address. |

The following provides an example of the download response:

```
     {"type" :"SyncContent",
     "body":{
         "session" :
              [
             {"ContentIndex":"abc123","SessionKey":"abcve123","url":
 "http://cloud/download1.servlet"},
             {"ContentIndex": " a b c 4 5 6 " , "SessionKey":
 "abcve456", "url": "http://cloud/download2.servlet"}
            ]
         }
     }
```

S314. The widget terminal sends a data download request to the storage server according to the download response. In this embodiment, the data download request carries a session key and a content index. The widget terminal sends the data download request to the storage server according to a data download address carried in the download response. The data download address is the address of the storage server that downloads the data.

S316. The storage server judges whether the data download request is legal. In this embodiment, the storage server compares the SessionKey and the ContentIndex in the data download request with the SessionKey and the ContentIndex in the synchronization verification message sent from the widget server. If both are the same, the data download request is legal. Then, the process proceeds to step S316. Otherwise, the process ends.

S318. The storage server obtains data that the widget terminal wants to download according to the synchronization verification message. In this embodiment, the storage server obtains the data corresponding to the ContentIndex according to the ContentIndex in the synchronization verification message, and transcodes the data that needs to be transcoded according to the data transcoding rule in the synchronization verification message.

S320. The storage server sends the transcoded data to the widget terminal.

According to the synchronization method provided in an embodiment of the present invention, different types of widget terminals may download data from the storage server on a timed basis to synchronize the data between the storage sever and the widget terminals. That is, it is guaranteed that the data in the storage server can be found in the widget terminals. When different types of widget terminals need to download data uploaded by other widget terminals in the storage server, the widget server needs to obtain the data information to be synchronized, and determine data information that can be synchronized according to the control information of the data; in addition, the widget server needs to determine data that needs to be transcoded and a transcoding rule for the data that can be synchronized according to the features of the widget terminal and data information that can be synchronized; the storage server transcodes the data. Thus, different types of widget terminals can view the data of each other. Furthermore, the data uploaded by widget terminals is downloaded to different types of widget terminals, so that the data is synchronized between the widget terminals and the server.

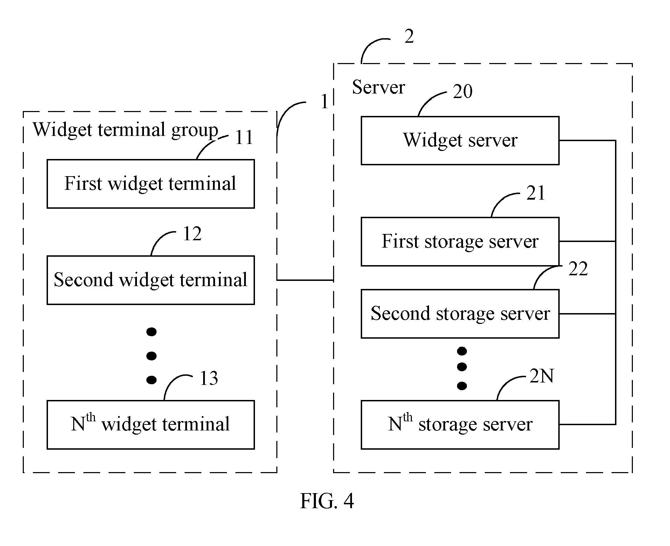

FIG. 4 is a schematic diagram illustrating an application environment of a widget system in an embodiment of the present invention.

In this embodiment, the widget system includes a widget terminal group 1 that comprises different types of widget terminals and a server 2. In this embodiment, the server 2 includes a widget server 20, a first storage server 21, a second storage server 22, ..., an N^{th} storage server 2N.Certainly, the storage server may be set in the widget server 20; that is, the storage server is a component of the widget server. The widget terminal group 1 includes a first widget terminal 11, a second widget terminal 12, ..., an N^{th} widget terminal 1N. For example, the first widget terminal 11 may be a mobile widget terminal; the second widget terminal 12 may be a TV widget terminal; and the third widget terminal 13 may be a vehicle widget terminal. In this embodiment, the user may view the data in the second widget terminal 12 to the N^{th} widget terminal 1N through the first widget terminal 11. In this case, the second widget terminal 12 to the N^{th} widget terminal 1N must upload their respective data to the server 2 for storing, and then the first widget terminal 11 downloads desired data from the server 2. Certainly, the first widget terminal 11 may automatically download all the data from the server 2, so that the user may view the data directly in the first widget terminal 11 at any time. It is understandable that the widget terminals upload their respective data to the server and other widget terminals may download such data from the server. Thus, the widget terminals may have data of other widget terminals, or the data in different types of widget terminals is synchronized through the server. Alternatively, the synchronization process may be divided into an upward synchronization process (from the widget terminals to the server) and a download synchronization process (from the server to the widget terminals). Thus, the type of widget terminals is not limited, which extends the use scope of the widget terminals and increases the service capabilities of the widget terminals.

The widget server 20 is adapted to: receive a data synchronization request from a widget terminal, obtain synchronized data information corresponding to the request, content index of the synchronized data and features of the widget terminal, and determine data that needs to be transcoded and a transcoding rule for such data according to the synchronized data information corresponding to the request and the features of the widget terminal.

The first storage server 21 to the N^{th} storage server 2N are adapted to: obtain the synchronized data according to the content index of the synchronized data, transcode the synchronized data according to the transcoding rule, and send the transcoded data to the widget terminal.

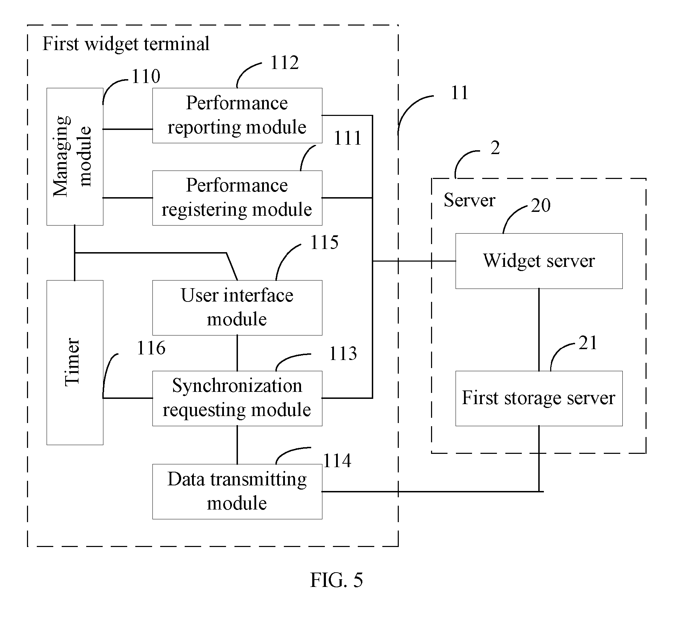

FIG. 5 shows a structure of a widget terminal in an embodiment of the present invention.

Although the widget terminal group comprises different types of widget terminals, the widget terminals have the same structure. This embodiment takes the first widget terminal 11 and the first storage server 21 as an example.

In this embodiment, the first widget terminal 11 includes a managing module 110, a performance registering module 111, a performance reporting module 112, a synchronization requesting module 113, a data transmitting module 114, a user interface module 115, and a timer 116.

When the first widget terminal 11 is used for the first time, the first widget terminal 11 needs to register its performance in the widget server 20. In this embodiment, the managing module 110 is adapted to send a registration notification to the performance registering module 111 when detecting that the widget terminal is activated for the first time. The performance registering module 111 is adapted to send a feature registration message to the widget server 20 when receiving the registration notification from the managing module 110. The feature registration message carries a terminal ID and a feature list. The managing module 110 is further adapted to check whether an event occurs in the widget terminal when receiving a registration success message from the widget server. In this embodiment, the event includes the download of data by the widget terminal, change of the remaining storage space due to the data deletion or change of the access mode of the widget terminal. The managing module 110 is further adapted to send a report notification to the performance reporting module 112 when an event is triggered, that is, when the widget terminal downloads data, or the remaining storage space of the widget terminal is changed due to the data deletion, or the access mode of the widget terminal is changed. The performance reporting module 112 is adapted to send a feature report request to the widget server 20 when receiving the report notification from the managing module 110. The feature report request carries the access mode and remaining storage space of the widget terminal.

The managing module 110 is further adapted to notify the user interface module 115 and the timer 116 that the widget terminal can be used normally after receiving a registration success message.

The user interface module 115 is adapted to receive operation information of the user. The operation information may be a data synchronization command. When the user interface module 115 receives a data synchronization command, the synchronization requesting module 113 is triggered. In this embodiment, the timer 116 is adapted to trigger the synchronization requesting module 113 on a timed basis. In this embodiment, the synchronization requesting module 113 may be triggered to send an upward synchronization request (that is, upload data to the server) or a data synchronization request (that is, download data from the server).

Case 1: The synchronization requesting module 113 is adapted to send an upward synchronization request to the widget server 20 when receiving an upward synchronization trigger command. The widget server 20 is adapted to: judge whether there are idle session resources when receiving the upward synchronization request; if so, store the basic information and control information of the data, return an upload response to the synchronization requesting module 113, and send an upload verification message to the first storage server 21. The upload verification message carries a session key and ContentSize, and the upload response carries a session key and a data upload address.

The synchronization requesting module 113 is further adapted to notify the data transmitting module 114 when receiving an upload response from the widget server 20.

The data transmitting module 114 is adapted to send a data upload request to the first storage server 21 according to the upload response received by the synchronization requesting module 113. In this embodiment, the data transmitting module 114 sends the data upload request to the first storage server 21 according to the data upload address in the upload response. The data upload request carries a session key.

The first storage server 21 is adapted to check whether the data upload request sent from the data transmitting module 114 is legal according to the upload verification message sent from the widget server 20. In this embodiment, the first storage server 21 compares the SessionKey in the data upload request with the SessionKey in the upload verification message sent from the widget server. If both are the same, the request is legal. The first storage server 21 is further adapted to send an acknowledgement to the data transmitting module 114 if determining that the data upload request sent from the data transmitting module 114 is legal.

The data transmitting module 114 is further adapted to send data that needs to be uploaded to the first storage server 21 when receiving an acknowledgement from the first storage server 21.

The first storage server 21 is further adapted to judge whether the size of the received data is equal to the ContentSize in the upload verification message sent from the widget server 20. If so, the first storage server 21 stores the uploaded data, and returns an operation success message to the data transmitting module 114.

Case 2: The synchronization requesting module 113 is adapted to send a data synchronization request to the widget server 20 when receiving a data synchronization trigger command. The widget server 20 is adapted to: after determining that there are idle session resources, obtain data information requested to be synchronized according to the condition field in the data synchronization request, and determine data information that can be synchronized according to the stored control information of the data. The widget server 20 is further adapted to: obtain a content index of the synchronized data according to the data information that can be synchronized, and determine contents that need to be transcoded in the synchronized data and a transcoding rule according to the features of the widget terminal that requests data synchronization and the synchronized data information. The widget server 20 is further adapted to send a download response to the synchronization requesting module 113 and a synchronization verification message to the first storage server 21 after determining the transcoding rule.

The data transmitting module 114 is further adapted to send a data download request to the first storage server 21 according to the download response received by the synchronization requesting module 113.

The first storage server 21 is further adapted to: judge whether the data download request is legal; if so, obtain data that the widget terminal wants to download according to the synchronization verification message. In this embodiment, the first storage server 21 compares the SessionKey and the ContentIndex in the data download request with the SessionKey and the ContentIndex in the synchronization verification message sent from the widget server. If both are the same, the request is legal. The first storage server 21 is further adapted to: obtain data corresponding to the ContentIndex according to the ContentIndex and the ContentSize in the synchronization verification message, and transcode the data according to the data transcoding rule in the synchronization verification message. The first storage server 21 is further adapted to send the transcoded data to the data transmitting module 114.

The data transmitting module 114 is further adapted to receive data from the first storage server 21.

In this embodiment, different types of widget terminals have the same structure. The widget terminals register their performance in the widget server to notify the widget server of which data the widget terminals can synchronize. In addition, the widget terminals may upload respective data to the storage server for storing on a timed basis to synchronize the data between the widget terminals and the storage server. That is, it is guaranteed that the data in the widget terminals can be found in the storage server. Furthermore, different types of widget terminals may download data from the storage server on a timed basis to synchronize the data between the storage server and the widget terminals. That is, it is guaranteed that the data in the storage server can be found in the widget terminals. When different types of widget terminals need to download data uploaded by other widget terminals in the storage server, the widget server obtains the synchronized data information, and determines data information that can be synchronized according to the control information of the data. In addition, the widget server determines data that needs to be transcoded and a data transcoding rule for the data that can be synchronized according to the features of the widget terminals and the data information that can be synchronized; the storage server transcodes the data, so that the data in different types of widget terminals can be synchronized through the server. Thus, the type of widget terminals is not limited, which extends the use scope of the widget terminals and increases the service capabilities of the widget terminals.

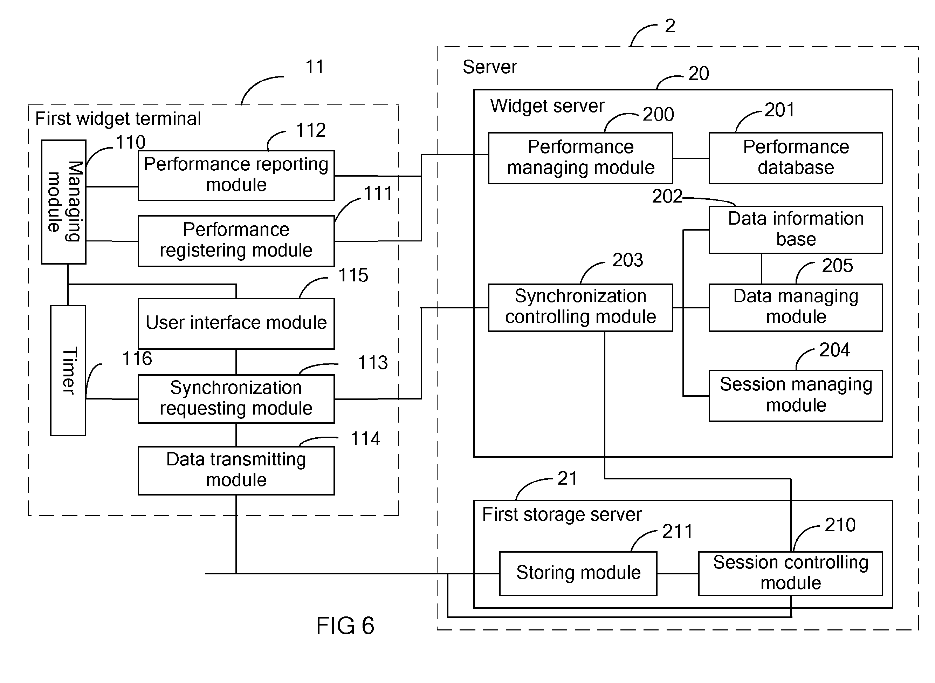

FIG. 6 shows a first structure of a server in an embodiment of the present invention.

In this embodiment, the widget server 20 includes a performance managing module 200, a performance database 201, a data information base 202, a synchronization controlling module 203, a session managing module 204, and a data managing module 205. The first storage server 21 includes a session controlling module 210 and a storing module 211.

In this embodiment, the performance managing module 200 is adapted to: receive a feature registration message from the performance registering module 111, obtain a terminal ID and a feature list in the feature registration message, store the obtained terminal ID and feature list in the performance database 201, and return a registration success message to the performance registering module 111. The performance managing module 200 is further adapted to: receive a feature report request from the performance reporting module 112, obtain the network access mode and remaining storage space of the widget terminal in the feature report request, and store the obtained network access mode and remaining storage space of the widget terminal in the performance database 201.

The synchronization controlling module 203 is adapted to: receive an upward synchronization request from the synchronization requesting module 113, and notify the session managing module 204 of allocating session resources for the widget terminal.

The session managing module 204 is adapted to: when determining that the first storage server 21 has idle session resources, allocate session resources for the widget terminal that sends the upward synchronization request, that is, send the SessionKey and data upload address to the synchronization controlling module 203.

The synchronization controlling module 203 is further adapted to notify the data managing module 205 when receiving the SessionKey and data upload address from the session managing module 204.

The data managing module 205 is adapted to: obtain the basic information and control information of the data in the upward synchronization request, store the obtained basic information and control information of the data in the data information base 202, and set a content index for the data.

The synchronization controlling module 203 is adapted to: after the data managing module 205 obtains the basic information and control information of the data, send an upload response to the synchronization requesting module 113 and an upload verification message to the session controlling module 210 in the first storage server 21.

The session controlling module 210 in the first storage server 21 is adapted to: receive a data upload request from the data transmitting module 114 and an upload verification message from the synchronization controlling module 203, and check whether the data upload request sent from the data transmitting module 114 is legal. In this embodiment, the session controlling module 210 compares the SessionKey in the data upload request with the SessionKey in the upload verification message sent from the widget server; if both are the same, the request is legal. Then, the session controlling module 210 sends an acknowledgement to the data transmitting module 114 and a ContentSize in the upload verification message to the storing module 211, and notifies the storing module 211 of receiving data from the data transmitting module 114.

The storing module 211 is adapted to: receive data from the data transmitting module 114, and judge whether the size of the received data is equal to the ContentSize in the upload verification message; if so, store the received data, and return an operation success message to the data transmitting module 114.

In this embodiment, the server receives data uploaded by different types of widget terminals, so that the data in the widget terminals can be found in the server. That is, the data is synchronized between the server and the widget terminals.

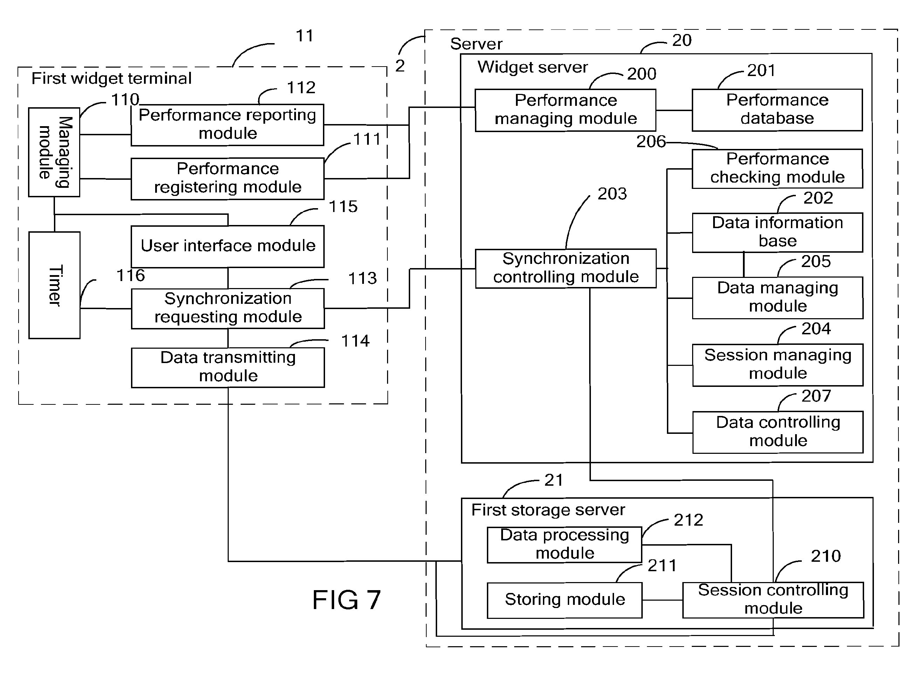

FIG. 7 shows a second structure of a server in an embodiment of the present invention.

In this embodiment, the widget server 20 includes a performance managing module 200, a performance database 201, a data information base 202, a synchronization controlling module 203, a session managing module 204, a data managing module 205, a performance checking module 206, and a data controlling module 207. The first storage server 21 includes a session controlling module 210, a storing module 211, and a data processing module 212.

The session managing module 204 is further adapted to: allocate session resources for the terminal that sends the data synchronization request when determining that the first storage server 21 has idle session resources, that is, send the SessionKey and data download address to the synchronization controlling module 203.

The synchronization controlling module 203 is further adapted to notify the data managing module 205 when the session managing module 204 determines that idle session resources are available.

The data managing module 205 is further adapted to: obtain data information requested to be synchronized according to the condition field in the data synchronization request, determine data information that can be synchronized according to the control information of the data, and obtain a content index of the synchronized data from the data information base 202 according to the data information that can be synchronized.

The synchronization controlling module 203 is further adapted to: receive the content index of the synchronized data and synchronized data information from the data managing module 205, and notify the performance checking module 206.

The performance checking module 206 is adapted to: obtain features of the widget terminal corresponding to the request from the performance database 201 according to the data synchronization request, and send the obtained features of the widget terminal to the synchronization controlling module 203.

The data controlling module 207 is adapted to determine data that needs to be transcoded in the synchronized data and a transcoding rule according to the features of the widget terminal that requests data synchronization and the synchronized data information sent from the synchronization controlling module 203.

The synchronization controlling module 203 is further adapted to send a download response to the synchronization transmitting module 113 and a synchronization verification message to the session controlling module 210 in the first storage server 21 after receiving the transcoding rule determined by the data controlling module 207. In this embodiment, the synchronization verification message carries a session key, ContentSize, a content index and a data transcoding rule. The download response carries a download address, a session key, and a content index.

The data transmitting module 114 is further adapted to send a data download request to the session controlling module 210 according to the download response received by the synchronization requesting module 113. The data download request carries a session key and a content index.

The session controlling module 210 is further adapted to judge whether the data download request is legal. In this embodiment, the session controlling module 210 compares the SessionKey and the ContentIndex in the data download request with the SessionKey and the ContentIndex in the synchronization verification message sent from the widget server. If both are the same, the request is legal. In this embodiment, when determining that the request is legal, the session controlling module 210 sends the ContentIndex, ContentSize and transcoding rule in the synchronization verification message to the data processing module 212.

The data processing module 212 is adapted to: obtain data corresponding to the ContentIndex from the storing module 211 according to the ContentIndex and ContentSize in the synchronization verification message, transcode the data according to the transcoding rule, and send the transcoded data to the data transmitting module 114.

With the server in this embodiment, when different types of widget terminals need to download data uploaded by other widget terminals in the storage server, the widget server obtains data information to be synchronized, determines data information that can be synchronized according to the control information of the data, and determines data that needs to be transcoded and a transcoding rule for the data that can be synchronized according to the features of the widget terminals and data information that can be synchronized; the storage server transcodes the data, so that different types of widget terminals can view the data of each other. In addition, the server downloads the data uploaded by the widget terminals to other types of widget terminals, and thereby synchronizes the data between the widget terminals and the server. Thus, the type of widget terminals is not limited, which extends the use scope of the widget terminals and increases the service capabilities of the widget terminals.

It is understandable to those skilled in the art that all or part of the steps in the preceding embodiments may be implemented by hardware instructed by a program. The program may be stored in a computer readable storage medium. When the program is executed, the processes in the preceding method embodiments may be involved. The storage medium may be a magnetic disk, a compact disk (CD), a read-only memory (ROM), or a random access memory (RAM).

Although the invention has been described through several exemplary embodiments, the invention is not limited to such embodiments. It is apparent that those skilled in the art can make various modifications and variations to the invention without departing from the scope of the invention.

## Claims

1. A method for synchronizing data between different types of widget terminals, comprising:
receiving a message that comprises a data synchronization request;
determining data that needs to be transcoded and a transcoding rule for such data according to the data synchronization request and features of a widget terminal that requests data synchronization; and
sending the data that is transcoded according to the transcoding rule to the widget terminal that requests data synchronization.

2. The method according to claim 1, wherein the determining data that needs to be transcoded and a transcoding rule for such data according to the data synchronization request and features of a widget terminal that requests data synchronization comprises:
determining data information that can be synchronized in the data synchronization request;
determining data that needs to be transcoded in the synchronized data according to the features of the widget terminal that requests data synchronization and the data information that can be synchronized; and
determining a transcoding rule for the data that needs to be transcoded according to the features of the widget terminal that requests data synchronization and the data information that can be synchronized, where the transcoding rule is a rule for converting the format of the data that needs to be transcoded into a format that is supported by the widget terminal that requests data synchronization.

3. The method according to claim 2, wherein the determining data information that can be synchronized in the data synchronization request comprises:
obtaining the data information requested to be synchronized according to the data synchronization request; and
determining the data information that can be synchronized in the data information requested to be synchronized according to control information of the data information.

4. The method according to claim 3, wherein the message that comprises a data synchronization request comprises a list of content types, the obtaining the data information requested to be synchronized according to the data synchronization request comprises:
obtaining the data information requested to be synchronized according to the list of content types.

5. The method according to claim 2, wherein the determining data that needs to be transcoded in the synchronized data according to the features of the widget terminal that requests data synchronization and the data information that can be synchronized comprises:
matching the format of the data information that can be synchronized with the features of the widget terminal, wherein the features comprise the resolution of the widget terminal, and image formats and video formats supported by the widget terminal; and
if the matching fails, determining that the data needs to be transcoded.

6. A widget server for synchronizing data, wherein the widget server communicates with different types of widget terminals and multiple storage servers, comprising:
a synchronization controlling module, adapted to receive a message that comprises a data synchronization request from a widget terminal, obtain data information that can be synchronized in the request, and obtain features of the widget terminal;
a data controlling module, adapted to determine data that needs to be transcoded in the synchronized data and a transcoding rule for such data according to the data information that can be synchronized and features of the widget terminal; and
the synchronization controlling module is further adapted to send the transcoding rule to a storage server so that the storage server transcodes the data that needs to be transcoded according to the transcoding rule and sends the transcoded data to the widget terminal.

7. The widget server according to claim 6, further comprising:
a performance managing module, adapted to receive a feature registration message from the widget terminal, and obtain static features in the feature registration message, where the static features comprise the resolution of the widget terminal, and image formats and video formats supported by the widget terminal; and
a performance database, adapted to store the static features obtained by the performance managing module.

8. The widget server according to claim 7, wherein the performance managing module is further adapted to receive a feature report request from the widget terminal, and obtain dynamic features of the widget terminal, where the dynamic features include the network access mode and remaining storage space of the widget terminal; and the performance database is further adapted to store the dynamic features.

9. The widget server according to claim 6, wherein the synchronization controlling module is further adapted to obtain a content index of the synchronized data corresponding to the data information that can be synchronized, and send the content index of the synchronized data to the storage server so that the storage server can obtain data corresponding to the content index of the synchronized data according to the content index of the synchronized data.

10. The widget server according to claim 6, further comprising:
the synchronization controlling module, further adapted to receive a data upload request from the widget terminal;
a data managing module, adapted to obtain basic information and control information of the data in the data upload request; and
a data information base, adapted to store the basic information and control information of the data, and set a content index for the data.

11. The widget server according to claim 10, wherein the data managing module is further adapted to obtain the data information requested to be synchronized according to the data synchronization request, determine the data information that can be synchronized in the data information requested to be synchronized according to the control information of the data stored in the data information base, and obtain the content index of the synchronized data according to the data information that can be synchronized.

12. The widget server according to claim 10, wherein the data controlling module is further adapted to
match the format of the data information that can be synchronized with the static features of the widget terminal; if the match fails, determine that the data needs to be transcoded, and determine the transcoding rule according to the data needs to be transcoded, where the transcoding rule is a rule for converting the format of the data that needs to be transcoded into a format that can be supported by the widget terminal that obtains the data.

13. A storage server for synchronizing data, comprising a session controlling module, a data processing module and a storing module, wherein, the storage server communicates with a widget terminal and a widget server;
the session controlling module is adapted to receive a transcoding rule and a content index for the synchronized data from the widget server; and
the data processing module is adapted to obtain the synchronized data from the storing module according to the content index for the synchronized data, transcode the synchronized data according to the transcoding rule, and send the transcoded data to the widget terminal.

14. The storage server according to claim 13, wherein the session controlling module is further adapted to receive an upload verification message from the widget server and a data upload request from the widget terminal, and determine whether the data upload request is legal according to a session key in the data upload request, where the upload verification message carries the session key and the size of the uploaded data, and the data upload request carries the session key and the size of the uploaded data.

15. The storage server according to claim 14, wherein the session controlling module is further adapted to determine the data upload request is legal when the session key in the upload verification message is the same as the session key in the data upload request; and
the storing module is further adapted to receive the uploaded data form the widget terminal, and determine whether to store the received data according to the size of the uploaded data and the size of the uploaded data in the upload verification message when the data upload request is legal, if the size of the uploaded data is equal to the size of the uploaded data in the upload verification, store the received data.

16. The storage server according to claim 14, wherein the session controlling module is further adapted to receive a data download request from the widget terminal, and receive a session key corresponding to the data download request from the widget server, where the data download request carries a session key and the content index for the synchronized data.

17. The storage server according to claim 14, wherein the session controlling module is further adapted to determine whether the data download request is legal by comparing the session key and the content index for the synchronized data in the data download request with the session key and the content index from the widget sever, if both are the same, the data download request is legal.

18. The storage server according to claim 14, wherein the data processing module is further adapted to obtain the synchronized data from the storing module according to the content index for the synchronized data, transcode the synchronized data according to the transcoding rule, and send the transcoded data to the widget terminal when the session controlling module determined that the download request is legal, where the transcoding rule is a rule for converting the format of the data that needs to be transcoded into a format that can be supported by the widget terminal that obtains the data.

19. A server for synchronizing data, wherein, the server communicates with different types of widget terminals, the server comprise a widget server according to any one of claims 6-12 and multiple storage servers according to any one of claims 13-18.
